# EUROPÄISCHE PATENTSCHRIFT

(11) **EP 3 652 052 B1**
(45) Veröffentlichungstag und Bekanntmachung des Hinweises auf die Patenterteilung: **16.09.2020**
(21) Anmeldenummer: 19711838.3
(22) Anmeldetag: 07.03.2019
(51) Int. Cl.: B62K 3/00, B62K 15/00

(54) **TRETROLLER UND VERFAHREN ZUM BEDIENEN EINES ROLLERS**
STEP SCOOTER AND OPERATING METHOD
TROTTINETTE ET MÉTHODE D'UTILISATION D'UN TROTTINETTE

(30) Priorität: 18.04.2018 DE 102018205864
(43) Veröffentlichungstag der Anmeldung: 20.05.2020
(73) Patentinhaber: Audi AG, 85045 Ingolstadt (DE)
(72) Erfinder: Die Erfindernennung liegt noch nicht vor
(86) Internationale Anmeldenummer: PCT/EP2019/055683
(87) Internationale Veröffentlichungsnummer: WO 2019/201508

(56) Entgegenhaltungen:
- CN-A- 105 818 912
- CN-Y- 2 640 903
- DE-A1-102013 003 484
- US-A1- 2009 241 723
- US-A1- 2017 182 398
- US-A1- 2017 320 534

## Beschreibung

Die Erfindung betrifft einen Roller mit einem Trittbrett, durch welches in einer Funktionsstellung des Rollers eine Aufstandsfläche für einen Nutzer des Rollers bereitgestellt ist. Eine Vorderachse des Rollers weist wenigstens ein Vorderrad auf, und eine Hinterachse weist wenigstens ein Hinterrad auf. Eine Lenksäule dient dem Übertragen einer Lenkbewegung auf das wenigstens eine Vorderrad. An der Lenksäule ist ein Betätigungselement zum Lösen einer Verriegelungseinrichtung angeordnet. Bei gelöster Verriegelungseinrichtung ist der Roller in eine Verstaustellung verbringbar.

Die DE 10 2013 003 484 A1 , welche die Merkmale der Präambel der unabhängigen Ansprüche 1 und 9 zeigt, beschreibt einen zusammenklappbaren Roller mit einem elektrischen Antriebsmotor. Der Roller weist zum Verriegeln eines Klappgelenks in einem Gebrauchszustand des Rollers und in einem zusammengeklappten Zustand des Rollers ein Verriegelungselement auf, welches über einen Bowdenzug mit einem Auslösehebel verbunden ist. Der Auslösehebel ist an einem Lenker des Rollers angeordnet.

Die DE 102 04 478 A1 beschreibt einen Roller, welcher eine Lenkereinheit, ein Frontteil mit zwei Fronträdern und ein Heckteil mit einem Hinterrad umfasst. An der Lenkereinheit ist ein Entriegelungshebel angeordnet. Wird der Entriegelungshebel nach unten bewegt, so wird ein Entriegeln der Lenkereinheit gegenüber dem Frontteil erreicht. Gleichzeitig wird eine Entriegelung zwischen Frontteil und Heckteil hergestellt. Eine Biegefeder verschwenkt dann das Heckteil um eine Achse hin zu dem Frontteil. So kann der Roller aus einem Roller-Zustand in einen Caddy-Zustand überführt werden. In dem Caddy-Zustand sind das Frontteil und das Heckteil zum Boden und gegeneinander geneigt, und sie stützen sich über ihre Räder am Boden ab.

Ein derartiger ist Roller aufgrund des Vorsehens des Frontteils mit den Vorderrädern und des von dem Frontteil separaten Heckteils mit dem Hinterrad vergleichsweise aufwändig.

Des Weiteren sind im Handel Roller mit einem Vorderrad und einem Hinterrad erhältlich, welche gefaltet beziehungsweise zusammengeklappt werden können, um einen Transport in einem Kraftfahrzeug oder in einem Verkehrsmittel des öffentlichen Personennahverkehrs zu vereinfachen. Das Zusammenklappen eines solchen Rollers sorgt auch dafür, dass der Platzbedarf zum Verstauen des Rollers zuhause beim Nutzer des Rollers verringert ist. Ein zum Zusammenklappen zu betätigender Klappmechanismus wird üblicherweise in der Nähe des Vorderrads des Rollers arretiert. Nach einem Entriegeln des Klappmechanismus kann ein Trittbrett des Rollers um eine Drehachse verschwenkt und zur Lenkstange hin hochgeklappt werden. Hierbei ist es vorteilhaft, wenn sich die Drehachse möglichst nah am Vorderrad befindet.

Als nachteilig ist bei einem derartigen Roller der Umstand anzusehen, dass der Klemmmechanismus beziehungsweise Entriegelungsmechanismus nur dann bedient werden kann, wenn der Nutzer des Rollers sich bückt. Zudem werden bei einem derartigen Roller mit einem Vorderrad und einem Hinterrad zum Arretieren beziehungsweise Zusammenklappen des Rollers beide Hände benötigt. Denn mit einer Hand erfolgt die Entriegelung des Klappmechanismus, und mit der anderen Hand muss der Roller gehalten werden, damit dieser nicht umfällt. Darüber hinaus erfolgt die Arretierung häufig kraftschlüssig, sodass vom Nutzer des Rollers eine hohe Kraft beziehungsweise Klemmkraft aufgebracht werden muss.

Wenn der Nutzer das Trittbrett eines derartigen Rollers belastet und einen Lenker des Rollers hält, so verläuft ein Lastpfad durch eine schräg angeordnete Strebe hin zum Trittbrett und über den Lenker hin zu der Vorderachse des Rollers. Da der Klappmechanismus zum Entriegeln und Zusammenklappen des Rollers im Bereich der schräg verlaufenden Strebe angeordnet ist, muss dieser Mechanismus sehr robust ausgelegt werden. Die mit der Anordnung des Mechanismus im Bereich der schräg verlaufenden Strebe zusammenhängenden, sehr indirekten Lastpfade sorgen darüber hinaus für eine vergleichsweise große Fehleranfälligkeit, ein hohes Mehrgewicht und für geringe Toleranzen. Dies ist nachteilig.

In der US2017320534 wird ein Roller mit einer Fußbetätigung gezeigt die den Klappmechanismus für das Trittbrett in Richtung Lenkstange freigibt. Dieser Klappmechanismus enthält eine Druckfeder die den Roller in den beiden Endstellungen festhält.

Des Weiteren kann ein solcher Roller im gefalteten Zustand schlecht getragen werden, denn der Roller kann leicht mit seinem gesamten Gewicht um eine Längsachse der Lenkstange pendeln. Darüber hinaus ist es auch nicht möglich, den zusammengeklappten Roller hinter sich herzuziehen, wenn der Roller nur ein Vorderrad aufweist. Denn auch beim Versuch, den Roller mit nur einem Vorderrad hinter sich herzuziehen, würde der Roller um die Längsachse der Lenkstange kippen.

Aufgabe der vorliegenden Erfindung ist es daher, einen besonders einfach verstaubaren Roller zu schaffen, und ein entsprechendes Verfahren zum Bedienen eines Rollers bereitzustellen.

Diese Aufgabe wird durch einen Roller mit den Merkmalen des Patentanspruchs 1 und durch ein Verfahren mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Der erfindungsgemäße Roller umfasst ein Trittbrett, durch welches in einer Funktionsstellung des Rollers eine Aufstandsfläche für einen Nutzer des Rollers bereitgestellt ist. Eine Vorderachse des Rollers weist wenigstens ein Vorderrad auf. Eine Hinterachse des Rollers weist wenigstens ein Hinterrad auf. Eine Lenksäule des Rollers ist zum Übertragen einer Lenkbewegung auf das wenigstens eine Vorderrad vorgesehen. An der Lenksäule ist ein Betätigungselement zum Lösen einer Verriegelungseinrichtung angeordnet. Bei gelöster Verriegelungseinrichtung kann der Roller in eine Verstaustellung verbracht werden. In der Verstaustellung des Rollers ist die Hinterachse zusammen mit dem Trittbrett um eine Drehachse auf die Lenksäule zu bewegt. Hierbei ist in der Verstaustellung ein Abstand zwischen der Hinterachse und der Vorderachse gleich einem in der Funktionsstellung zwischen der Hinterachse und der Vorderachse vorhandenen Abstand. Das Trittbrett wird also beim Hochklappen desselben nicht selber gefaltet oder zusammengeklappt. Dadurch, dass die Hinterachse zusammen mit dem Trittbrett um die Drehachse hin zu der Lenksäule bewegt wird, um den Roller in die Verstaustellung zu verbringen, kann der Roller besonders einfach verstaut werden. Darüber hinaus ist der Roller in der Verstaustellung sehr kompakt. Dies gilt insbesondere, wenn in der Verstaustellung die Aufstandsfläche des Trittbretts im Wesentlichen parallel zu der Lenksäule ausgerichtet ist. Im Hinblick auf eine große Kompaktheit des Rollers in der Verstaustellung kann weiter vorteilhaft vorgesehen sein, dass das Trittbrett und/oder die Hinterachse in der Verstaustellung des Rollers zumindest bereichsweise an der Lenksäule anliegen.

Des Weiteren lässt sich durch das Bewegen der Hinterachse zusammen mit dem Trittbrett um die Drehachse auf die Lenksäule zu erreichen, dass die Drehachse einem Mittelpunkt des wenigstens einen Vorderrads besonders nahe liegt. Dadurch ist beim Fahren mit dem Roller ein sehr direkter Kraftfluss erreicht, welcher die Verriegelungseinrichtung entlastet. Die Verriegelungseinrichtung braucht somit weniger robust ausgelegt zu werden, als dies bei einer Anordnung einer Verriegelungseinrichtung an einer schräg verlaufenden Strebe der Fall ist, welche von einem Trittbrett des Rollers zu einer Lenkstange des Rollers führt. Durch die Entlastung der Verriegelungseinrichtung ist zudem ermöglicht, dass sich die Verriegelungseinrichtung sehr einfach mittels des von der Verriegelungseinrichtung beabstandeten, nämlich an der Lenksäule angeordneten Betätigungselements betätigen beziehungsweise bedienen oder lösen lässt.

Besonders einfach lässt sich der Roller lenken, weil zum Übertragen der Lenkbewegung auf das wenigstens eine Vorderrad eine Lenkstange der Lenksäule mittels einer Lenkhandhabe um eine Längsachse der Lenksäule drehbar ist.

Vorteilhaft ist es weiterhin, dass das Betätigungselement an der Lenkhandhabe angeordnet ist. Denn dann kann wenigstens eine Hand des Nutzers an der Lenkhandhabe verbleiben, um das Lösen der Verriegelungseinrichtung und das Verbringen des Rollers in die Verstaustellung zu bewirken. Der Nutzer des Rollers braucht also seine Haltung nicht zu verändern und sich insbesondere nicht zu bücken, um das Lösen der Verriegelungseinrichtung zu bewirken.

Durch das Betätigen des Betätigungselements ist eine Bewegungseinrichtung aktivierbar, mittels welcher das Verbringen des Rollers aus der Funktionsstellung in die Verstaustellung bewirkt werden kann. Eine derartige, beispielsweise in der Funktionsstellung federbelastete Bewegungseinrichtung, macht das Zusammenklappen des Rollers, also das Verbringen des Rollers aus der Funktionsstellung in die Verstaustellung, besonders einfach und komfortabel. Denn das Aktivieren der Bewegungseinrichtung führt dazu, dass die Hinterachse zusammen mit dem Trittbrett um die Drehachse hin zu der Lenksäule bewegt wird.

Zusätzlich kann vorgesehen sein, dass eine Lenkbewegung des Rollers durch Verändern einer Neigung des Trittbretts bewirkbar ist. Dadurch ist eine besonders große Flexibilität für den Nutzer beim Lenken des Rollers bereitgestellt.

Die Lenkhandhabe kann insbesondere als schlaufenartiges Griffteil ausgebildet sein, welches einen Querholm und zwei den Querholm mit der Lenkstange verbindende Streben umfasst. An einem derartigen Griffteil kann der Roller besonders einfach angehoben oder gezogen werden. Insbesondere kann ein derartiges Griffteil vom Nutzer am Querholm gehalten werden, wenn der Nutzer den in seine Verstaustellung verbrachten Roller wie einen Rollkoffer hinter sich herziehen möchte.

Vorzugsweise ist vorgesehen, dass das Betätigungselement an dem Querholm des Griffteils, beispielsweise an einer Unterseite des Querholms angeordnet ist.

Als weiter vorteilhaft hat es sich gezeigt, wenn ein Gewicht des Trittbretts und der Hinterachse geringer ist als ein Gewicht der Lenksäule und der Vorderachse. Auf diese Weise ist dafür gesorgt, dass das meiste Gewicht des Rollers in der Funktionsstellung desselben auf den Bereich der Vorderachse konzentriert ist. Durch diese Gewichtsverteilung kann ein Hochklappen des Trittbretts zusammen mit der Hinterachse, insbesondere das durch die Bewegungseinrichtung bewirkte Hochklappen, besonders einfach realisiert werden. Zudem ist es in der Verstaustellung des Rollers vorteilhaft, wenn ein vergleichsweise leichtes Trittbrett und eine vergleichsweise leichte Hinterachse hin zu der Lenksäule bewegt sind. Denn so kann ein durch das Gewicht des Trittbretts und der Hinterachse bedingtes Wanken des Rollers, also eine Bewegung um eine Wankachse des Rollers, besonders weitgehend vermieden werden, wenn der Nutzer den in seine Verstaustellung verbrachten Roller wie einen Rollkoffer hinter sich herzieht.

Um das Trittbrett in Leichtbauweise und somit mit einem besonders geringen Gewicht zu realisieren, kann das Trittbrett aus einem faserverstärkten Kunststoff, etwa aus einem glasfaserverstärkten Kunststoff und/oder aus einem carbonfaserverstärkten Kunststoff gebildet sein. Auch durch eine Fertigung des Trittbretts aus Holz kann für ein besonders geringes Gewicht des Trittbretts gesorgt werden.

Des Weiteren verleihen derartige Werkstoffe dem Trittbrett im Gegensatz zu einem steifen, aus Metall gebildeten Trittbrett besonders gute federnde Eigenschaften, sodass der Komfort des Nutzers beim Fahren mit dem Roller verbessert ist. Aufgrund der federnden Eigenschaften des Trittbretts ist außerdem keine gesonderte Federung eines Fahrwerks des Rollers erforderlich, und dennoch wird ein hoher Komfort bei der Nutzung des Rollers erreicht.

Als weiter vorteilhaft hat es sich gezeigt, wenn das wenigstens eine Vorderrad mittels wenigstens eines Elektromotors antreibbar ist. Denn dann braucht der Nutzer den Roller nicht allein mit Muskelkraft fortzubewegen. Vorzugsweise ist ein zum Versorgen des wenigstens einen Elektromotors ausgebildeter elektrischer Energiespeicher an der Lenksäule angeordnet. Denn dies trägt mit dazu bei, dass der größte Teil des Gewichts des Rollers auf der Vorderachse konzentriert ist. Dasselbe gilt in analoger Weise, wenn der wenigstens eine zum Antreiben des wenigstens einen Vorderrads ausgebildete Elektromotor an der Vorderachse angeordnet ist.

Vorzugsweise weist die Vorderachse zwei Vorderräder auf. Dies sorgt einerseits für eine gute Stabilität des Rollers. Des Weiteren lässt sich so sehr einfach erreichen, dass der Nutzer den in seine Verstaustellung verbrachten Roller wie einen Rollkoffer oder Trolley hinter sich herziehen kann. Wenn der Roller zwei Vorderräder aufweist, so kann insbesondere ein jeweiliger Elektromotor zum Antreiben des jeweiligen Vorderrads vorgesehen sein.

Alternativ, bevorzugt jedoch zusätzlich kann die Hinterachse des Rollers zwei Hinterräder aufweisen. So ist einerseits die Stabilität des Rollers sehr groß, wenn der Nutzer des Rollers auf dem Trittbrett steht. Ein Kippen des Rollers ist dann nämlich einfach und sicher vermieden. Der Nutzer kann dann außerdem den in seine Funktionsstellung verbrachten Roller einfach abstellen, ohne diesen anlehnen zu müssen, und ohne dass der Roller hierfür mit einem Ständer versehen zu werden braucht.

Als weiter vorteilhaft hat es sich gezeigt, wenn an der Hinterachse eine Bremseinrichtung angeordnet ist. Beispielsweise kann durch Betätigen eines Bremspedals der Nutzer ein Abbremsen des wenigstens einen Hinterrads des Rollers bewirken. Hierbei kann das Niederdrücken des Bremspedals ein Ziehen an einem Seilzug oder dergleichen bewirken, welcher wiederum einen Bremsbelag der Bremseinrichtung gegen eine Bremsscheibe der Bremseinrichtung zieht. So kann auf besonders einfache Weise ein sicheres und komfortables Abbremsen des Rollers bewirkt werden.

Vorzugsweise weist das Trittbrett einen die Aufstandsfläche umfassenden Zentralbereich auf und wenigstens einen an den Zentralbereich angrenzenden Endbereich. Der wenigstens eine Endbereich steigt zu der Hinterachse hin und/oder zu der Vorderachse hin an. Insbesondere kann ein erster Endbereich zur Hinterachse hin ansteigen und ein zweiter Endbereich zur Vorderachse hin ansteigen. So ist dafür gesorgt, dass bezogen auf die Vorderachse und die Hinterachse der Zentralbereich des Trittbretts vergleichsweise tief liegt. Dies führt zu einem niedrigen Schwerpunkt des Rollers, was wiederum die Fahreigenschaften des Rollers verbessert.

Schließlich hat es sich als vorteilhaft gezeigt, wenn an der Lenksäule eine Anzeigevorrichtung zum Anzeigen wenigstens eines Betriebsparameters des Rollers angeordnet ist. Die Anzeigevorrichtung kann insbesondere eine Mehrzahl von Leuchtdioden oder dergleichen umfassen und beispielsweise ein Anzeigen einer Fahrgeschwindigkeit, eines Ladezustands eines elektrischen Energiespeichers des Rollers, einer im elektrischen Fahrbetrieb des Rollers gegebenen Reichweite des Rollers, von Navigationshinweisen und dergleichen ermöglichen. Auch dies ist einer komfortablen Nutzung des Rollers zuträglich.

Bei dem erfindungsgemäßen Verfahren zum Bedienen eines Rollers, welcher ein Trittbrett, durch welches in einer Funktionsstellung eine Aufstandsfläche für einen Nutzer des Rollers bereitgestellt ist, eine wenigstens ein Vorderrad aufweisende Vorderachse, eine wenigstens ein Hinterrad aufweisende Hinterachse, und eine Lenksäule zum Übertragen einer Lenkbewegung auf das wenigstens eine Vorderrad umfasst, wird durch Betätigen eines an der Lenksäule angeordneten Betätigungselements eine Verriegelungseinrichtung gelöst. Bei gelöster Verriegelungseinrichtung wird der Roller in eine Verstaustellung verbracht. Zum Übertragen der Lenkbewegung auf das wenigstens eine Vorderrad ist eine Lenkstange der Lenksäule mittels einer Lenkhandhabe um eine Längsachse der Lenksäule drehbar, und das an der Lenkhandhabe angeordnete Betätigungselement wird betätigt. Zum Verbringen des Rollers in die Verstaustellung wird die Hinterachse zusammen mit dem Trittbrett um eine Drehachse verschwenkt und hierbei auf die Lenksäule zu bewegt. In der Verstaustellung des Rollers ist ein Abstand zwischen der Hinterachse und der Vorderachse gleich einem in der Funktionsstellung zwischen der Hinterachse und der Vorderachse vorhandenen Abstand. Das Trittbrett wird also beim Hochklappen desselben nicht selber gefaltet oder zusammengeklappt. Durch das Betätigen des Betätigungselements wird eine Bewegungseinrichtung aktiviert. Das Aktivieren der Bewegungseinrichtung führt dazu, dass die Hinterachse zusammen mit dem Trittbrett um die Drehachse hin zu der Lenksäule bewegt wird. Durch diese Art der Bedienung lässt sich der Roller besonders einfach verstauen beziehungsweise zusammenklappen oder falten, also aus der Funktionsstellung in die Verstaustellung verbringen.

Die Erfindung umfasst auch die Kombinationen der beschriebenen Ausführungsformen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Rollers beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: perspektivisch einen Roller mit vier Rädern, wobei ein Betätigungselement zum Lösen einer Verriegelungseinrichtung des Rollers an einem Griffteil einer Lenksäule des Rollers angeordnet ist; und
- Fig. 2: das Griffteil in einer vergrößerten Detailansicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

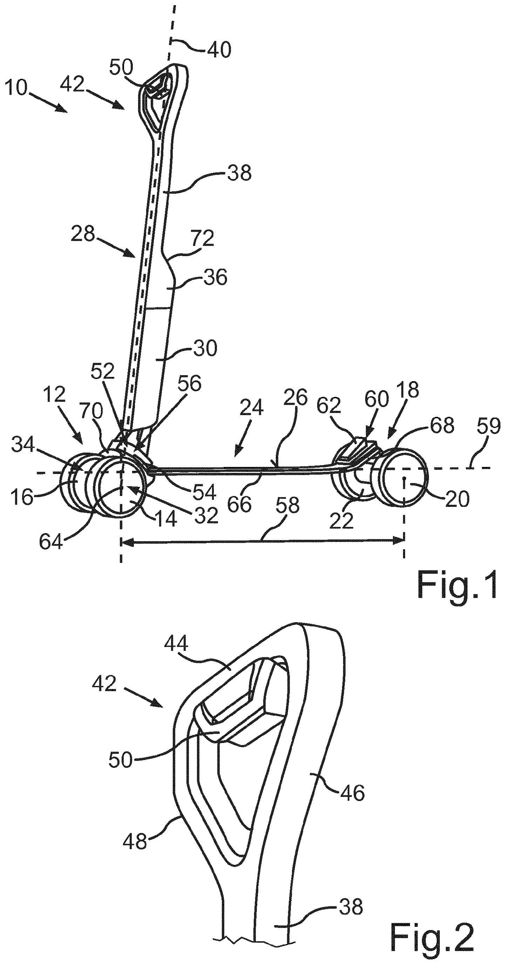

In Fig. 1 ist perspektivisch ein Roller 10 gezeigt, welcher vorliegend eine Vorderachse 12 mit einem ersten Vorderrad 14 und einem zweiten Vorderrad 16 sowie eine Hinterachse 18 mit einem ersten Hinterrad 20 und einem zweiten Hinterrad 22 umfasst. Ein Trittbrett 24 des Rollers 10 weist eine Oberseite 26 auf, auf welcher in der in Fig. 1 gezeigten Funktionsstellung des Rollers 10 ein Nutzer des Rollers 10 stehen kann. Zum Übertragen einer Lenkbewegung auf die Vorderräder 14, 16 weist der Roller 10 eine Lenksäule 28 auf. Vorliegend ist der Roller 10 als elektromotorisch antreibbarer Roller 10 ausgebildet. Daher ist an der Lenksäule 28 ein elektrischer Energiespeicher in Form einer wiederaufladbaren Batterie 30 angeordnet. Die Batterie 30 dient dem Versorgen jeweiliger Elektromotoren 32, 34, welche beispielsweise als Radnabenmotoren ausgebildet sein können. Die Elektromotoren 32, 34 sind zum Antreiben der Vorderräder 14, 16 ausgebildet. Wenigstens ein Elektronikbaustein 36 beziehungsweise ein Steuergerät zum Ansteuern der Elektromotoren 32, 34 und/oder zum Überwachen eines Zustands, insbesondere eines Ladezustands, der Batterie 30 ist ebenfalls an der Lenksäule 28 angeordnet. Die Batterie 30 kann unterhalb des Elektronikbausteins 36 angeordnet sein, was im Hinblick auf eine möglichst niedrigen Schwerpunkt des Rollers 10 vorteilhaft ist.

An der Lenksäule 28, vorliegend oberhalb des Elektronikbausteins 36 (und somit auch oberhalb der Batterie 30), ist vorzugsweise eine grafische Benutzerschnittstelle beziehungsweise Anzeigevorrichtung 72 angeordnet. Auf dieser Anzeigevorrichtung 72 können Betriebsparameter des Rollers 10 angezeigt werden wie etwa eine Fahrgeschwindigkeit, ein Ladezustand der Batterie 30, eine Restreichweite des Rollers 10 oder dergleichen. Des Weiteren kann vorgesehen sein, dass dem Nutzer des Rollers 10 über die Anzeigevorrichtung 72 Navigationshinweise gegeben werden können.

Die Lenksäule 28 umfasst eine Lenkstange 38 welche zum Übertragen einer Lenkbewegung auf die Vorderräder 14, 16 um eine Längsachse 40 der Lenksäule 28 gedreht werden kann. Zum Drehen der Lenkstange 38 und somit zum Lenken umfasst die Lenksäule 28 eine Lenkhandhabe, welche beispielsweise als schlaufenförmiges Griffteil 42 ausgebildet ist.

Das Griffteil 42 ist in Fig. 2 vergrößert dargestellt. Demgemäß umfasst das Griffteil 42 einen Querholm 44 sowie zwei Streben 46, 48, welche den Querholm 44 mit der Lenkstange 38 verbinden.

Vorliegend ist an dem Querholm 44 ein Betätigungselement 50 angeordnet, welches dem Lösen einer Verriegelungseinrichtung 52 des Rollers 10 dient. Die Verriegelungseinrichtung 52 ist vorliegend lediglich im Hinblick auf ihre Positionierung im Bereich der Vorderachse 12 gezeigt. Das Lösen der Verriegelungseinrichtung 52 bewirkt, dass der Roller 10 in eine Verstaustellung verbracht werden kann, in welcher der Roller 10 zusammengeklappt beziehungsweise zusammengefaltet ist. Bei diesem Zusammenklappen des Rollers 10 wird die Hinterachse 18 zusammen mit dem Trittbrett 24 um eine Drehachse 54 verschwenkt und auf die Lenksäule 28 zu bewegt. Auch dieses Hochklappen beziehungsweise Verschwenken des Trittbretts 24 zusammen mit der Hinterachse 18 um die Drehachse 54 wird vorliegend durch das Betätigen des Betätigungselements 50 bewirkt. Das Betätigen des Betätigungselements 50 aktiviert nämlich eine vorliegend nicht näher gezeigte Bewegungseinrichtung 56, welche das Trittbrett 24 hin zu der Lenkstange 38 führt. Ein Abstand 58 zwischen der Hinterachse 18 und der Vorderachse 12 bleibt hierbei konstant, das Trittbrett 24 wird also beim Hochklappen desselben nicht selber gefaltet oder zusammengeklappt. Auch die Bewegungseinrichtung 56 ist vorliegend lediglich im Hinblick auf ihre Positionierung im Bereich der Vorderachse 12 gezeigt.

Der Roller 10 vereinigt die hervorragenden Eigenschaften eines zweirädrigen Rollers, insbesondere Elektrorollers, mit einem Lenker mit den Eigenschaften eines vier Räder aufweisenden Skateboards, bei welchem das Lenken durch Verändern einer Neigung des Trittbretts 24, also ein Verkippen des Trittbretts 24 um seine Wankachse 59 bewirkt werden kann. Der Roller 10 kann also einerseits gelenkt werden, indem mittels des Griffteils 42 die Lenkstange 38 um die Längsachse 40 der Lenksäule 28 gedreht wird. Zusätzlich oder alternativ kann der Roller 10 durch die Veränderung der Neigung des Trittbretts 24 gelenkt werden.

Die Positionierung der Batterie 30 und der Elektromotoren 32, 34 im Bereich der Vorderachse 12 beziehungsweise über der Vorderachse 12 bringt es mit sich, dass das meiste Gewicht auf der Vorderachse 12 konzentriert ist. Des Weiteren ist vorzugsweise das Trittbrett 24 in Leichtbauweise konzipiert beispielsweise durch die Verwendung eines faserverstärkten Kunststoffs und/oder von Holz als Werkstoff.

Die nicht angetriebenen Hinterräder 20, 22 des Rollers 10 können mittels einer Bremseinrichtung 60 mechanisch gebremst werden, welche an der Hinterachse 18 angeordnet ist, und von welcher vorliegend lediglich ein mit dem Fuß betätigbares Bremspedal 62 gezeigt ist. Trotz des Vorsehens der Bremseinrichtung 60 an der Hinterachse 18 kann das Trittbrett 24 zusammen mit der Hinterachse 18 leicht um die Drehachse 54 verschwenkt und somit nach oben geklappt beziehungsweise auf die Lenksäule 28 zu bewegt werden, wenn der Roller 10 in seine Verstaustellung verbracht werden soll.

Dem einfachen Verbringen des Rollers 10 in die Verstaustellung ist es des Weiteren zuträglich, dass die Drehachse 54 besonders nah an einem Mittelpunkt 64 des jeweiligen Vorderrads 14, 16 angeordnet ist. Dies erleichtert nämlich das automatische, vorliegend durch die Bewegungseinrichtung 56 bewirkte Hochklappen des Trittbretts 24 hin zu der Lenksäule 28. Denn durch die optimierte Gewichtsverteilung, bei welcher das Gewicht des Trittbretts 24 und der Hinterachse 18 bedeutend geringer ist als das Gewicht der Lenksäule 28 und der Vorderachse 12, lässt sich das automatische Hochklappen des Trittbretts 24 besonders einfach realisieren.

Zudem sorgt die Nähe der Drehachse 54 zu dem Mittelpunkt 64 für einen sehr direkten Kraftfluss beim Fahren, also dann, wenn das Gewicht des Nutzers des Rollers 10 auf dem Trittbrett 24 und in geringem Maße auch auf der Lenksäule 28 lastet. Durch den direkten Kraftfluss wird auch die Verriegelungseinrichtung 52 entlastet. Dies ermöglicht oder erleichtert die Bedienung beziehungsweise Betätigung der Verriegelungseinrichtung 52 mittels des an der Lenksäule 28, vorliegend an dem Griffteil 42, angeordneten Betätigungselements 50.

Das Entriegeln des Rollers 10 erfolgt somit durch das Betätigen des an dem Lenker oder Griffteil 42 beziehungsweise an einer derartigen Lenkhandhabe ausgebildeten Betätigungselements 50. Das Betätigen des Betätigungselements 50 führt des Weiteren dazu, dass durch die Bewegungseinrichtung 56 oder ein derartiges Kraftelement das Trittbrett 24 zur Lenkstange 38 geführt wird. Der Nutzer braucht sich jedoch hierfür nicht zu bücken, sondern er kann neben dem Roller 10 stehend einfach das Betätigungselement 50 betätigen, etwa indem das Betätigungselement 50 hin zu dem Querholm 44 des Griffteils 42 bewegt wird. Nach dem Hochklappen des Trittbretts 24 und somit dem Verbringen des Rollers 10 in seine Verstaustellung kann der Nutzer den Roller 10 an dem Griffteil 42 ergreifen und wie einen Rollkoffer hinter sich herziehen.

Das Trittbrett 24 weist vorliegend einen die Aufstandsfläche umfassenden Zentralbereich 66 auf und einen ersten an den Zentralbereich 66 anschließenden Endbereich 68. Dieser erste Endbereich 68 steigt zur Hinterachse 18 hin an. In diesem Endbereich 68 befindet sich zudem das Bremspedal 62, welches folglich ebenfalls bezogen auf die Wankachse 59 geneigt ist. Das Trittbrett 24 umfasst einen weiteren an den Zentralbereich 66 angrenzenden Endbereich 70, welcher zur Vorderachse 12 hin ansteigt. Aufgrund dieser geneigten Endbereiche 68, 70 ist der Zentralbereich 66 des Trittbretts 24 vergleichsweise tiefliegend angeordnet. Dies führt zu einer großen Bodennähe des Zentralbereichs 66 und somit zu einem tiefliegenden Schwerpunkt des Rollers 10.

Die Drehachse 54, um welche der Zentralbereich 66 und der hintere Endbereich 68 des Trittbretts 24 beim Verbringen des Rollers 10 in seine Verstaustellung verschwenkt werden, kann sich je nach Ausgestaltung des Klappmechanismus des Rollers 10 an der Stelle befinden, an welcher der Zentralbereich 66 an den vorderen Endbereich 70 angrenzt. Die Drehachse 54 kann sich also im Bereich eines durch den vorderen Endbereich 70 und den Zentralbereich 66 ausgebildeten Knicks des Trittbretts 24 befinden.

Insgesamt zeigen die Beispiele, wie durch die Erfindung eine automatische Einklappfunktion für ein individuelles Fortbewegungsmittel in Form des Rollers 10 bereitgestellt ist.

## Patentansprüche

1. Roller mit einem Trittbrett (24), durch welches in einer Funktionsstellung des Rollers (10) eine Aufstandsfläche für einen Nutzer des Rollers (10) bereitgestellt ist, mit einer wenigstens ein Vorderrad (14, 16) aufweisenden Vorderachse (12) und einer wenigstens ein Hinterrad (20, 22) aufweisenden Hinterachse (18), mit einer Lenksäule (28) zum Übertragen einer Lenkbewegung auf das wenigstens eine Vorderrad (14, 16), und mit einem an der Lenksäule (28) angeordneten Betätigungselement (50) zum Lösen einer Verriegelungseinrichtung (52), wobei bei gelöster Verriegelungseinrichtung (52) der Roller (10) in eine Verstaustellung verbringbar ist,
wobei in der Verstaustellung des Rollers (10) die Hinterachse (18) zusammen mit dem Trittbrett (24) um eine Drehachse (54) auf die Lenksäule (28) zu bewegt ist, wobei in der Verstaustellung ein Abstand (58) zwischen der Hinterachse (18) und der Vorderachse (12) gleich einem in der Funktionsstellung zwischen der Hinterachse (18) und der Vorderachse (12) vorhandenen Abstand (58) ist, das Trittbrett (24) also beim Hochklappen desselben nicht selber gefaltet oder zusammengeklappt wird, wobei zum Übertragen der Lenkbewegung auf das wenigstens eine Vorderrad (14, 16) eine Lenkstange (38) der Lenksäule (28) mittels einer Lenkhandhabe (42) um eine Längsachse (40) der Lenksäule (28) drehbar ist und das Betätigungselement (50) an der Lenkhandhabe (42) angeordnet ist,
**dadurch gekennzeichnet, dass**
durch das Betätigen des Betätigungselements (50) eine Bewegungseinrichtung (56) aktivierbar ist, welche dazu ausgebildet ist, das Trittbrett (24) automatisch hin zu der Lenkstange (38) zu führen, sodass mittels der Bewegungseinrichtung (56) das Verbringen des Rollers (10) aus der Funktionsstellung in die Verstaustellung bewirkbar ist, indem das Aktivieren der Bewegungseinrichtung (56) dazu führt, dass die Hinterachse (18) zusammen mit dem Trittbrett (24) um die Drehachse (54) hin zu der Lenksäule (28) bewegt wird.

2. Roller nach Anspruch 1,
**dadurch gekennzeichnet, dass**
eine Lenkbewegung des Rollers (10) durch Verändern einer Neigung des Trittbretts (24) bewirkbar ist.

3. Roller nach Anspruch 1 oder 2,
**dadurch gekennzeichnet, dass**
die Lenkhandhabe (42) als Griffteil mit einem Querholm (44) und zwei den Querholm (44) mit der Lenkstange (38) verbindenden Streben (46, 48) ausgebildet ist.

4. Roller nach einem der vorhergehenden Ansprüche,
**dadurch gekennzeichnet, dass**
ein Gewicht des, insbesondere aus einem faserverstärkten Kunststoff und/oder aus Holz gebildeten, Trittbretts (24) und der Hinterachse (18) geringer ist als ein Gewicht der Lenksäule (28) und der Vorderachse (12).

5. Roller nach einem der vorhergehenden Ansprüche,
**dadurch gekennzeichnet, dass**
das wenigstens eine Vorderrad (14, 16) mittels wenigstens eines, insbesondere an der Vorderachse (12) angeordneten, Elektromotors (32, 34) antreibbar ist, wobei ein zum Versorgen des Elektromotors (32, 34) ausgebildeter elektrischer Energiespeicher (30) an der Lenksäule (28) angeordnet ist.

6. Roller nach einem der vorhergehenden Ansprüche,
**dadurch gekennzeichnet, dass**
die Vorderachse (12) zwei Vorderräder (14, 16) aufweist und/oder die, insbesondere eine Bremseinrichtung (60) umfassende, Hinterachse (18) zwei Hinterräder (20, 22) aufweist.

7. Roller nach einem der vorhergehenden Ansprüche,
**dadurch gekennzeichnet, dass**
das Trittbrett (24) einen die Aufstandsfläche umfassenden Zentralbereich (66) aufweist und wenigstens einen an den Zentralbereich (66) angrenzenden Endbereich (68, 70), welcher zu der Hinterachse (18) hin und/oder zu der Vorderachse (12) hin ansteigt.

8. Roller nach einem der vorhergehenden Ansprüche,
**dadurch gekennzeichnet, dass**
an der Lenksäule (28) eine Anzeigevorrichtung (72) zum Anzeigen wenigstens eines Betriebsparameters des Rollers (10) angeordnet ist.

9. Verfahren zum Bedienen eines Rollers (10), welcher ein Trittbrett (24), durch welches in einer Funktionsstellung des Rollers (10) eine Aufstandsfläche für einen Nutzer des Rollers (10) bereitgestellt ist, eine wenigstens ein Vorderrad (14, 16) aufweisende Vorderachse (12), eine wenigstens ein Hinterrad (20, 22) aufweisende Hinterachse (18), und eine Lenksäule (28) zum Übertragen einer Lenkbewegung auf das wenigstens eine Vorderrad (14, 16) umfasst, bei welchem durch Betätigen eines an der Lenksäule (28) angeordneten Betätigungselements (50) eine Verriegelungseinrichtung (52) gelöst wird, und bei welchem bei gelöster Verriegelungseinrichtung (52) der Roller (10) in eine Verstaustellung verbracht wird, wobei zum Übertragen der Lenkbewegung auf das wenigstens eine Vorderrad (14, 16) eine Lenkstange (38) der Lenksäule (28) mittels einer Lenkhandhabe (42) um eine Längsachse (40) der Lenksäule (28) drehbar ist, und wobei das an der Lenkhandhabe (42) angeordnete Betätigungselement (50) betätigt wird, und zum Verbringen des Rollers (10) in die Verstaustellung die Hinterachse (18) zusammen mit dem Trittbrett (24) um eine Drehachse (54) verschwenkt und auf die Lenksäule (28) zu bewegt wird, wobei in der Verstaustellung des Rollers (10) ein Abstand (58) zwischen der Hinterachse (18) und der Vorderachse (12) gleich einem in der Funktionsstellung zwischen der Hinterachse (18) und der Vorderachse (12) vorhandenen Abstand (58) ist, das Trittbrett (24) also beim Hochklappen desselben nicht selber gefaltet oder zusammengeklappt wird, **dadurch gekennzeichnet,**
**dass** durch das Betätigen des Betätigungselements (50) eine Bewegungseinrichtung (56) aktiviert wird und das Aktivieren der Bewegungseinrichtung (56) dazu führt, dass die Hinterachse (18) zusammen mit dem Trittbrett (24) um die Drehachse (54) hin zu der Lenksäule (28) bewegt wird, indem die Bewegungseinrichtung (56) das Trittbrett (24) automatisch hin zu der Lenkstange (38) führt.

## Claims

1. Scooter comprising a deck (24) which, in a functional position of the scooter (10), provides a standing surface for a user of the scooter (10), comprising a front axle (12) having at least one front wheel (14, 16) and a rear axle (18) having at least one rear wheel (20, 22), comprising a steering column (28) for transmitting a steering motion to the at least one front wheel (14, 16), and comprising an actuation element (50) arranged on the steering column (28) in order to release a locking device (52), wherein when the locking device (52) is released, the scooter (10) can be brought into a stowing position,
wherein, in the stowing position of the scooter (10), the rear axle (18) together with the deck (24) is moved toward the steering column (28) about an axis of rotation (54), wherein, in the stowing position, a distance (58) between the rear axle (18) and the front axle (12) is equal to a distance (58) between the rear axle (18) and the front axle (12) in the functional position, thus, when folded up, the deck (24) itself is not folded or collapsed, wherein in order to transmit the steering motion to the at least one front wheel (14,16), a steering rod (38) of the steering column (28) can be rotated about a longitudinal axis (40) of the steering column (28) by means of a steering handle (42) and the actuation element (50) is arranged on the steering handle (42),
**characterised in that**
a movement device (56) can be activated by actuating the actuation element (50), which is designed to automatically guide the deck (24) towards the steering rod (38), so that the movement of the scooter (10) from the functional position into the stowing position can be brought about by means of the movement device (56), **in that** by activating the movement device (56), the rear axle (18) is moved together with the deck (24) about the axis of rotation (54) towards the steering column (28).

2. Scooter according to claim 1,
**characterised in that**
a steering motion of the scooter (10) can be brought about by altering an inclination of the deck (24).

3. Scooter according to claim 1 or 2,
**characterised in that**
the steering handle (42) is designed as a grip comprising a transverse bar (44) and two struts (46, 48) connecting the transverse bar (44) to the steering rod (38).

4. Scooter according to any of the preceding claims,
**characterised in that**
a weight of the deck (24), made in particular from a fibre reinforced plastic and/or from wood, and of the rear axle (18) is less than a weight of the steering column (28) and the front axle (12).

5. Scooter according to any of the preceding claims,
**characterised in that**
the at least one front wheel (14, 16) can be driven by at least one electric motor (32, 34), arranged in particular on the front axle (12), wherein an electrical energy store (30) designed to supply the electric motor (32, 34) is arranged on the steering column (28).

6. Scooter according to any of the preceding claims,
**characterised in that**
the front axle (12) has two front wheels (14, 16) and/or the rear axle (18), comprising in particular a braking device (60), has two rear wheels (20, 22).

7. Scooter according to any of the preceding claims,
**characterised in that**
the deck (24) has a central region (66) which comprises the standing surface and at least one end region (68, 70) adjoining the central region (66), which rises towards the rear axle (18) and/or towards the front axle (12).

8. Scooter according to any of the preceding claims,
**characterised in that**
a display device (72) is arranged on the steering column (28), in order to display at least one operating parameter of the scooter (10).

9. Method for operating a scooter (10) which comprises a deck (24) which, in a functional position of the scooter (10), provides a standing surface for a user of the scooter (10), a front axle (12) having at least one front wheel (14, 16), a rear axle (18) having at least one rear wheel (20, 22) and a steering column (28) for transmitting a steering motion to the at least one front wheel (14, 16), which through actuation of an actuation element (50) arranged on the steering column (28) releases a locking device (52), and through which when the locking device (52) is released, the scooter (10) is brought into a stowing position, wherein in order to transmit the steering motion to the at least one front wheel (14, 16), a steering rod (38) of the steering column (28) can be rotated about a longitudinal axis (40) of the steering column (28) by means of a steering handle (42), and wherein the actuation element (50) arranged on the steering handle (42) is actuated and in order to bring the scooter (10) into the stowing position, the rear axle (18) is pivoted together with the deck (24) about an axis of rotation (54) and moved towards the steering column (28), wherein, in the stowing position of the scooter (10), a distance (58) between the rear axle (18) and the front axle (12) is equal to a distance (58) between the rear axle (18) and the front axle (12) in the functional position, wherein, when folded up, the deck (24) itself is not folded or collapsed, **characterised in that**, a movement device (56) is activated by actuating the actuation element (50) and as a result of the activation of the movement device (56), the rear axle (18) together with the deck (24) is moved about the axis of rotation (54) towards the steering column (28), in which the movement device (56) automatically guides the deck (24) towards the steering rod (38).

## Revendications

1. Trottinette avec un marchepied (24), par lequel une surface support pour un utilisateur de la trottinette (10) est mise à disposition dans une position fonctionnelle de la trottinette (10), avec un essieu avant (12) présentant au moins une roue avant (14, 16) et un essieu arrière (18) présentant au moins une roue arrière (20, 22), avec une colonne de direction (28) pour la transmission d'un mouvement de direction sur l'au moins une roue avant (14, 16), et avec un élément d'actionnement (50) agencé au niveau de la colonne de direction (28) pour le desserrage d'un dispositif de verrouillage (52), dans laquelle lorsque le dispositif de verrouillage (52) est desserré la trottinette (10) peut être amenée dans une position de rangement,
dans laquelle dans la position de rangement de la trottinette (10), l'essieu arrière (18) est déplacé conjointement avec le marchepied (24) autour d'un axe de rotation (54) vers la colonne de direction (28), dans laquelle dans la position de rangement une distance (58) entre l'essieu arrière (18) et l'essieu avant (12) est égale à une distance (58) présente dans la position fonctionnelle entre l'essieu arrière (18) et l'essieu avant (12), le marchepied (24) lors de son déploiement n'est pas lui-même plié ou replié, dans laquelle pour la transmission du mouvement de direction sur l'au moins une roue avant (14, 16), une barre de direction (38) de la colonne de direction (28) peut tourner au moyen d'une poignée de direction (42) autour d'un axe longitudinal (40) de la colonne de direction (28) et l'élément d'actionnement (50) est agencé au niveau de la poignée de direction (42),
**caractérisée en ce que**
par l'actionnement de l'élément d'actionnement (50) un dispositif de déplacement (56) est activable, lequel est réalisé pour guider le marchepied (24) automatiquement vers la barre de direction (38) de sorte que le passage de la trottinette (10) de la position fonctionnelle à la position de rangement peut être provoqué au moyen du dispositif de déplacement (56), par le fait que l'activation du dispositif de déplacement (56) entraîne que l'essieu arrière (18) est déplacé conjointement avec le marchepied (24) autour de l'axe de rotation (54) vers la colonne de direction (28).

2. Trottinette selon la revendication 1,
**caractérisée en ce que**
un mouvement de direction de la trottinette (10) peut être provoqué par modification d'une inclinaison du marchepied (24).

3. Trottinette selon la revendication 1 ou 2,
**caractérisée en ce que**
la poignée de direction (42) est réalisée en tant qu'élément de préhension avec une traverse (44) et deux entretoises (46, 48) reliant la traverse (44) à la barre de direction (38).

4. Trottinette selon l'une quelconque des revendications précédentes,
**caractérisée en ce que**
un poids du marchepied (24), formé en particulier en un plastique renforcé par fibres et/ou en bois, et de l'essieu arrière (18) est inférieur à un poids de la colonne de direction (28) et de l'essieu avant (12).

5. Trottinette selon l'une quelconque des revendications précédentes,
**caractérisée en ce que**
l'au moins une roue avant (14, 16) peut être entraînée au moyen d'au moins un moteur électrique (32, 34), agencé en particulier au niveau de l'essieu avant (12), dans laquelle un accumulateur d'énergie électrique (30) réalisé pour l'alimentation du moteur électrique (32, 34) est agencé au niveau de la colonne de direction (28).

6. Trottinette selon l'une quelconque des revendications précédentes,
**caractérisée en ce que**
l'essieu avant (12) présente deux roues avant (14, 16) et/ou l'essieu arrière (18), comprenant en particulier un dispositif de freinage (60), présente deux roues arrière (20, 22).

7. Trottinette selon l'une quelconque des revendications précédentes,
**caractérisée en ce que**
le marchepied (24) présente une zone centrale (66) comprenant la surface support et au moins une zone d'extrémité (68, 70) jouxtant la zone centrale (66), laquelle augmente vers l'essieu arrière (18) et/ou vers l'essieu avant (12).

8. Trottinette selon l'une quelconque des revendications précédentes,
**caractérisée en ce que**
un dispositif d'affichage (72) pour l'affichage d'au moins un paramètre de fonctionnement de la trottinette (10) est agencé au niveau de la colonne de direction (28).

9. Procédé de commande d'une trottinette (10), laquelle comprend un marchepied (24), par lequel une surface support pour un utilisateur de la trottinette (10) est mise à disposition dans une position fonctionnelle de la trottinette (10), un essieu avant (12) présentant au moins une roue avant (14, 16), un essieu arrière (18) présentant au moins une roue arrière (20, 22), et une colonne de direction (28) pour la transmission d'un mouvement de direction sur l'au moins une roue avant (14, 16), dans lequel par l'actionnement d'un élément d'actionnement (50) agencé au niveau de la colonne de direction (28) un dispositif de verrouillage (52) est desserré, et dans lequel lorsque le dispositif de verrouillage (52) est desserré la trottinette (10) est amenée dans une position de rangement, dans lequel pour la transmission du mouvement de direction sur l'au moins une roue avant (14, 16), une barre de direction (38) de la colonne de direction (28) peut tourner au moyen d'une poignée de direction (42) autour d'un axe longitudinal (40) de la colonne de direction (28), et dans lequel l'élément d'actionnement (50) agencé au niveau de la poignée de direction (42) est actionné,
et pour le passage de la trottinette (10) à la position de rangement, l'essieu arrière (18) est basculé conjointement avec le marchepied (24) autour d'un axe de rotation (54) et est déplacé vers la colonne de direction (28), dans lequel dans la position de rangement de la trottinette (10), une distance (58) entre l'essieu arrière (18) et l'essieu avant (12) est égale à une distance (58) présente dans la position fonctionnelle entre l'essieu arrière (18) et l'essieu avant (12), le marchepied (24) lors de son déploiement n'est pas lui-même plié ou replié,
**caractérisé en ce que**
par l'actionnement de l'élément d'actionnement (50) un dispositif de déplacement (56) est activé et l'activation du dispositif de déplacement (56) entraîne que l'essieu arrière (18) est déplacé conjointement avec le marchepied (24) autour de l'axe de rotation (54) vers la colonne de direction (28) par le fait que le dispositif de déplacement (56) guide le marchepied (24) automatiquement vers la barre de direction (38).
